(19) **Europäisches Patentamt**

**European Patent Office**

**Office européen des brevets**

(11) **EP 1 235 868 B1**

(12) **EUROPEAN PATENT SPECIFICATION**

(45) Date of publication and mention
of the grant of the patent:
**11.01.2006 Bulletin 2006/02**

(51) Int Cl.:
*C08F 265/04* (2006.01)     *C08F 265/06* (2006.01)

(21) Application number: **01917949.8**

(22) Date of filing: **02.04.2001**

(86) International application number:
**PCT/KR2001/000561**

(87) International publication number:
**WO 2001/092358 (06.12.2001 Gazette 2001/49)**

(54) **A METHOD FOR PREPARING THERMOPLASTIC RESIN HAVING EXCELLENT COLOR MATCHING PROPERTY, RESIDENT GLOSS AND WEATHER RESISTANCE**

VERFAHREN ZUR HERSTELLUNG VON THERMOPLASTISCHEM HARZ MIT AUSGEZEICHNETER FARBBESTÄNDIGKEIT, GLANZ UND WETTERBESTÄNDIGKEIT

PROCEDE DE PREPARATION D'UNE RESINE THERMOPLASTIQUE PRESENTANT UNE EXCELLENTE PROPRIETE DE MISE A LA TEINTE, UNE BRILLANCE DURABLE ET UNE RESISTANCE AUX INTEMPERIES

(84) Designated Contracting States:
**DE FR IT**

(30) Priority: **02.06.2000 KR 2000030427**

(43) Date of publication of application:
**04.09.2002 Bulletin 2002/36**

(73) Proprietor: **LG Chemical Co. Ltd
Seoul 150-721 (KR)**

(72) Inventors:
• **SHIN, Yang-Hyun**
  **Yeocheon-city,**
  **Chollanam-do 555-050 (KR)**
• **YOO, Keun-Hoon**
  **Yuseong-ku,**
  **Daejeon-city 305-333 (KR)**
• **AHN, Tae-Bin**
  **Uijeongbu-city,**
  **Kyungki-do 480-101 (KR)**
• **LEE, Chan-Hong**
  **Yuseong-ku,**
  **Daejeon-city 305-345 (KR)**

(74) Representative: **Harrison Goddard Foote
Belgrave Hall
Belgrave Street
Leeds LS2 8DD (GB)**

(56) References cited:
**EP-A- 0 621 291        WO-A-99/31154
JP-A- 11 116 767        JP-A- 63 120 716
KR-A- 2000 000 784     US-A- 4 478 982
US-A- 5 612 420**

**Description**

**BACKGROUND OF THE INVENTION**

**(a) Field of the Invention**

The present invention relates to a method for preparing thermoplastic resin, and more particularly to a method for preparing weather resistant thermoplastic resin having excellent color matching properties and resident gloss.

**(b) Description of the Related Art**

Generally, ASA resin, a terpolymer consisting of acrylate-styreneacrylonitrile, is prepared by grafting styrene and acrylonitrile compounds into acrylate rubber, and it is commonly used for outdoor electronic parts, building materials and sports goods due to its good properties including weather resistance, chemical resistance, processibility, etc. However, ASA resin is restrictively used for materials requiring colors such as red, yellow, green, etc., because during the preparation thereof, styrene and acrylonitrile compounds are not sufficiently grafted into acrylate rubber and bare acrylate rubber exist therein, thus color matching properties and resident gloss thereof are poor. Specifically, refractive indices of the compounds used to prepare ASA resin are 1.460 for butylacrylate, 1.518 for acrylonitrile and 1.590 for styrene. Thus, the difference between the refractive index of acrylate rubber that is used as a core and those of the compounds grafted therein is large. Therefore, ASA resin has poor color matching properties since it looks opaque and only the surface of the product prepared therefrom can be seen when color matching. In addition, since aqueous potassium persulfate (KPS) having good latex stability is used as an initiator in order to compensate for a decrease in the stability of acrylate rubber latex, and potassium persulfate limits improvement in grafting rate, the improvement in color matching properties and resident gloss is limited.

Methods for preparing weather resistant ASA are disclosed in USP 3,426,101, Japanese Patent Laid-open publication Nos. Hei 4-180949, and Hei 5-202264, Hei 7-316243, and German Patent Nos. 1260135 and 19,826,135, etc. Although these patents disclose methods for preparing ASA resin for improving weather resistance, impact resistance, etc., they do not disclose methods for improving color matching properties and resident gloss.

As a method for improving color-matching properties, JP Patent No. 61-155516 discloses roll-mixing milling polybutadiene rubber for increasing color- matching properties with acrylate rubber. Although this method can improve color matching properties and impact resistance, double bonds of polybutadiene rubber remain in resin prepared by the method, thereby decreasing weather resistance of the resin. JP Patent No. 11-240925 discloses preparing resin with a multi-layered structure in order to minimize bare acrylate rubber. However, this method has defects in that the process is complicated and reaction time is long, which makes the method uneconomical. In addition, although USP 4,831,079 discloses using PMMA resin having excellent color matching properties, this method is uneconomical due to the use of expensive PMMA, and it has a limit in improving impact resistance.

US 5,612,420 and EP Q 621 291 disclose polymeric gloss modifiers for reducing the glossiness of a resin.

US 4,478,982 discloses a high nitrile content based resin, but is silent as to the glossiness or otherwise thereof.

Accordingly, there is a need for a method for preparing weather resistance resin having excellent color matching properties and resident gloss.

**SUMMARY OF THE INVENTION**

As a result of various studies and experiments for solving these problems, the present inventors discovered that the color matching properties of ASA resin can be improved by introducing aromatic vinyl monomers having a comparatively high refractive index when preparing core rubber latex resin to increase the refractive index of a core rubber latex and by introducing methacrylate alkylester monomers when preparing graft ASA resin to decrease the refractive indices of grafted compounds, thereby making the refractive indices of core rubber latex and compounds grafted therein similar, and that color matching properties and resident gloss can be simultaneously improved by using an oil-soluble initiator instead of a water-soluble initiator.

Accordingly, it is an object of the present invention to provide a method for preparing weather resistant resin having excellent color matching properties and resident gloss.

In order to achieve the object, the present invention provides a method for preparing thermoplastic resin comprising the steps of a) preparing a core rubber latex using alkyl acrylate monomers and aromatic vinyl monomers having a high refractive index, and b) grafting aromatic vinyl, vinyl cyanide and methacrylate alkyl ester monomers into the core rubber latex prepared in step a) using an oil-soluble initiator.

## DETAILED DESCRIPTION AND THE PREFERRED EMBODIMENTS

The present invention will now be explained in more detail.

1) Preparation of core rubber latex

A core rubber latex is prepared through two steps of polymerisation. In the first polymerisation step, a crosslinked alkyl acrylate rubber is prepared using alkyl acrylate monomers and an ethyleneglycolmethacrylate crosslinking agent without using an emulsifier. In the second polymerisation step, the rubber prepared in the first polymerisation step is used as a seed, and alkyl acrylate, an emulsifier, a crosslinking agent, a grafting agent and aromatic vinyl monomers having a relatively high refractive index are introduced therein to make alkylacrylate rubber particles bigger to prepare rubber latex having a large diameter. The aromatic vinyl compound having a relatively high refractive index is used to increase the refractive index of the rubber latex to make it similar to the refractive indices of grafted monomers.

The monomer predominantly used in the first polymerisation step is preferably butylacrylate, and the contents thereof is preferably 0.5 to 5 wt parts per 100 wt parts of total monomers. Examples of the crosslinking agent include ethylglycoldimethacrylate, diethyleneglycoldimethacrylate, triethyleneglycoldimethacrylate, 1,3-butandioldimethacrylate, 1,6-hexanedioldimethacrylate, neopentylglycoldimethacrylate, trimethylolpropanetrimethacrylate, trimethylolmethanetriacryalte, etc., and the contents thereof is preferably 0.05 to 0.3 wt parts per 100 wt parts of total monomers. As an electrolyte, $NaHCO_3$, $Na_2S_2O_7$, $K_2CO_3$, etc. can be used, and the contents thereof is preferably 0.05 to 0.4 wt parts per 100 wt parts of total monomers. As a polymerization initiator, an inorganic or organic peroxide compound can be used, and a water soluble initiator or oil soluble initiator can be used. Examples of the initiator include water soluble initiators such as potassium persulfate, sodium persulfate and ammonium persulfate, and oil soluble initiators such as cumenehydroperoxide and benzoylperoxide. The contents of the polymerization initiator is preferably 0.05 to 0.2 wt parts per 100 wt parts of total monomers.

The second polymerization step is conducted to make the diameter of rubber latex bigger using the rubber latex polymerized in the first step as a seed, and alkyl acrylate and aromatic vinyl monomers having relatively high refractive index are used in this step. Butylacrylate is preferably used as an alkyl acrylate, and styrene having a refractive index of approximately 1.590 is preferably used as an aromatic vinyl compound having a relatively high refractive index. 29 to 49 wt parts of butylacrylate and 1 to 7 wt parts of aromatic vinyl compound are preferably used per 100 wt parts of total monomers. As an emulsifier, carboxylate metal salt derivatives having a pH of 9 to 13 and carbon atoms of C12-20, such as fatty acid metal salts, rosin acid metal salts, etc. can be used, and as a grafting agent, allylmethacrylate (AMA), triallylsocyanurate (TAIC), triallylamine (TAA), diallylamine (DAA), etc. can be used, and 0.01 to 0.07 wt parts of the emulsifier is preferably used per 100 wt parts of total monomers.

The pH of the prepared core rubber latex is preferably 5 to 9, with a diameter of 2500 to 5000 Å.

2) Preparation of graft ASA resin

Weather resistant ASA resin is prepared by grafting an aromatic vinyl compound, vinyl cyanide and methacrylate alkyl ester momoners into the core rubber latex prepared in 1). This process is characterized by mixing methacrylate alkyl ester monomers having a relatively low refractive index with the grafted aromatic vinyl and vinyl cyanide monomers. Since this decreases the refractive index of the grafted monomers to make it similar to the refractive index of core rubber latex, color matching properties can be improved. In addition, this process is characterized by improving a grafting rate using an oil soluble initiator to improve color matching properties and resident gloss.

Preferably, 10 to 50 wt parts of aromatic vinyl compound, 10 to 25 wt parts of vinyl cyan compound and 1 to 25 wt parts of methacrylate alkyl ester compound are used per 100 wt parts of total monomers. As a methacrylate alkyl ester, methylmethacrylate having a refractive index of approximately 1.490 is preferably used. Although each component can be added by a whole amount administration method, multi-stage divisional administration and continuous administration methods are preferable in order to minimize the production of coagulum. Examples of initiator include oil soluble peroxides such as cumenehydroperoxide (CHP), diisopropylbenzenehydroperoxide (DIPHP), etc. and oxidation-reduction catalyst such as sodium formaldehyde sulfoxylate, sodium ethylenediamine tetraacetate, ferrous sulfate, dextrose, sodium pyrophosphate, sodium sulfite, etc. Tertiary dodecylmercaptan is preferably used as a molecular weight controlling agent, and examples of the emulsifier include rosin acid salts such as potassium rosin acid, sodium rosin acid, etc, fatty acid salts such as potassium oleate; sodium oleate, sodium stearate, and alkylarylsulfone salt, etc.

The latex diameter of the prepared graft ASA resin is preferably 3500 to 6000 Å, and the pH thereof is preferably 8 to 11.

The present invention will now be explained with reference to the following Examples. However, these are to illustrate the present invention and the present invention is not limited thereto.

[Example 1]

A) Preparation of core rubber latex

1) First polymierization step

The following ingredients were introduced into a polymerization reactor under nitrogen atmosphere and the temperature was elevated to 70 °C and then they were reacted for 1 hour.

| | |
|---|---|
| Ion-exchange water | 70 wt parts |
| Butylacrylate | 2 wt parts |
| Ethyleneglycoldimethacrylate (EDMA) | 0.02 wt parts |
| Sodium bicarbonate | 0.1 wt parts |
| Potassium persulfate (KPS) | 0.04 wt parts |

2) Second polymerization step

All the following ingredients except potassium persulfate were mixed in a polymerization reactor, and then the product of the first polymerization step and a catalyst were continuously introduced therein at 70 °C for 4 hours to conduct polymerization reaction.

| | |
|---|---|
| Ion exchange water | 45 wt parts |
| Sodium dioctylsulfosuccinate | 0.5 wt parts |
| Butylacrylate | 38 wt parts |
| Styrene | 5 wt parts |
| Ethyleneglycoldimethacrylate | 0.12 wt parts |
| Allyl methacrylate | 0.04 wt parts |
| Sodium bicarbonate | 0.1 wt parts |
| Potassium persulfate | 0.06 wt parts |

The diameter of the obtained latex was 4000 Å as measured by the dynamic laser-light scattering method using Nicomp (Model: 370HPL), the pH thereof was 8 and a polymerization conversion rate was 98%.

B) Preparation of graft ASA resin

All the following ingredients were mixed except a catalyst, diisopropylbenzenehydroperoxide. The mixture and the catalyst were continuously introduced in the rubber latex polymerization product prepared in A) at 70 °C for 3 hours and polymerization reacted, and then reacted at 80 °C for another 1 hour in order to increase a polymerization conversion rate, and cooled to 60 °C.

| | |
|---|---|
| Ion exchange water | 63 wt parts |
| Sodium dioctylsulfosuccinate | 0.5 wt parts |
| Styrene(SM) | 17 wt parts |
| Acrylonitrile(AN) | 18 wt parts |
| Methylmethacrylate | 20 wt parts |
| Tertiary dodecylmercaptan(TDDM) | 0.3 wt parts |
| Sodium ethylenediaminetetraacetate | 0.1 wt parts |
| Ferrous sulfate | 0.005 wt parts |
| Formaldehydesodiumsulfoxylate | 0.23 wt parts |
| Dioctylsulfosuccinate | 0.25 wt parts |
| Diisopropylenebenzenehydroperoxide(DIPHP) | 0.4 wt parts |

The diameter of the polymerized latex was measured by the dynamic laser-light scattering method using Nicomp (Model: 370HPL), and the graft rate thereof was calculated by the following equation.

## [Equation]

## Graft rate (%) = the weight of grafted monomers/the weight of rubber X 100

The diameter of the polymerized latex was 4400 Å, the pH thereof was 9.5, the polymerization conversion rate thereof was 99% and the graft rate thereof was 45%.

The obtained latex was coagulated at 90 °C with calcium chloride aqueous solution, dehydrated and dried to obtain ASA powder particles having weather resistance.

B) Measurement of color matching properties and resident gloss of ASA resin

To 45 wt parts of ASA resin powder prepared in B) and 55 wt parts of general SAN 92HR(LG Chemical product), 0.4 wt parts of activator, 0.3 wt parts of antioxidant, and 0.1 wt parts of photostabilizer were introduced and roll- mixing milled at 220 °C using a double shaft extruder to prepare a pellet, and the pellet was injected again and the properties were measured.

The properties were measured by the ASTM method, and the color matching property was observed with naked eyes by a 5 grade scale. 5 points is best level, and 1 point is poorest. In addition, resident gloss was estimated by standing the resin at 200 °C in an extruder for 20 minutes to measure gloss.

The impact resistance was 19, color matching property was 5 and resident gloss was 85.

[Example 2]

ASA resin was prepared and the properties thereof were measured by the same method as in Example 1, except that the amounts of styrene and methylmethacrylate used in B) were changed to 32 wt parts and 5 wt parts, respectively. As results of analyzing the resin, the graft rate was 48%, and a particle diameter was 4450 Å. And, regarding the properties thereof, the impact resistance was 20, color matching property was 4, and resident gloss was 86.

[Example 3]

ASA resin was prepared and the properties thereof were measured by the same method as in Example 1, except that TAIC was used instead of EDMA in A). As results of analyzing the resin, the graft rate was 43 %, and particle diameter was approximately 4400 Å. Regarding the properties, the impact resistance was 18, color matching property was 5, and resident gloss was 85.

[Example 4]

ASA resin was prepared and the properties thereof were measured by the same method as in Example 1, except that CHP was used instead of KPS in A). As results of analyzing the resin, the graft rate was 46% and the particle diameter was approximately 4450 Å. Regarding the properties, the impact resistance was 18, color matching property was 5, and resident gloss was 86.

[Example 5]

ASA resin was prepared and the properties thereof were measured by the same method as in Example 1, except that DIPHP was used instead of KPS in A). As results of analyzing the resin, the graft rate was 46%, and particle diameter wa approximately 4500 Å. Regarding the properties, the impact resistance was 18, color matching property was 5, and resident gloss was 86.

[Example 6]

ASA resin was prepared and the properties thereof were measured by the same method as in Example 1, except that sodium laurylsulfate was used as an emulsifier instead of sodiumdioctylsulfonate in B). As results of analyzing the resin, the graft rate was 45%, and particle diameter was approximately 4450 Å. Regarding the properties, the impact resistance was 18, color matching property was 5 and resident gloss was 86.

[Example 7]

ASA resin was prepared and the properties thereof were measured by the same method as in Example 1, except that CHP was used as a catalyst instead of DIPHP in B). As results of analyzing the resin, the graft rate was 45%, and particle diameter was approximately 4400 Å. Regarding the properties, the impact resistance was 19, color matching property was 5 and resident gloss was 85.

[Comparative Example 1]

ASA resin was prepared and the properties thereof were measure by the same method as in Example 1, except that 5 wt parts of styrene were not used in the second step of A) process, and the amount of styrene in B) process increased from 17 wt parts to 22 wt parts. As results of analyzing the resin, the graft rate was 45%, and particle diameter was approximately 4300 Å. Regarding the properties thereof, the impact resistance was 20, color matching property was 3, which is not good, and resident gloss was 86.

[Comparative Example 2]

ASA resin was prepared and the properties thereof were measured by the same method as in Example 1, except that 20 wt parts of methylmethacrylate were not used, and instead the amount of styrene increased from 17 wt parts to 37 wt parts in B) process. As results of analyzing the resin, the graft rate was 50%, and particle diameter was approximately 4600 Å. Regarding the properties, the impact resistance was 21, color matching property was 2, which is quite poor, and resident gloss was 87.

[Comparative Example 3]

ASA resin was prepared and the properties thereof were measured by the same method as in Example 1, except that 5 wt parts of styrene in the second step of A) process and 20 wt parts of methylmethacrylate in B) process were not used, and instead the amount of styrene in B) process increased from 17 wt parts to 42 wt parts. As results of analyzing the resin, the graft rate was 51%, and particle diameter was approximately 4650 Å. Regarding the properties thereof, the impact resistance was 21, color matching property was 1, which is poor, and resident gloss was 86.

[Comparative Example 4]

ASA resin was prepared and the properties thereof were measured by the same method as in Example 1, except that KPS catalyst was used instead of DIPHP in B) process. As results of analyzing the resin, the graft rate was 36%, and particle diameter was approximately 4100 Å. Regarding the properties, the impact resistance was 16, color matching property was 2, which is quite poor, and resident gloss was 65.

As explained, the resin of the present invention has improved color matching properties since the refractive indexes of rubber latex and the compounds grafted thereto are made similar and colors look deep if color matched, and it simultaneously has improved color matching properties and resident gloss due to the use of an oil soluble catalyst instead of a water soluble initiator in the grafting step.

**Claims**

1.  A method for preparing a weather resistant thermoplastic resin having excellent color matching properties and resident gloss comprising the steps of:

    a) preparing a core rubber latex using alkyl acrylate monomers and aromatic vinyl monomers; and
    b) grafting aromatic vinyl compound, vinyl cyanide compound, and methacrylate alkyl ester compound monomers into the core rubber latex prepared in step a) with an oil soluble initiator;

    **characterized in that** the aromatic vinyl monomers in step a) have a higher refractive index than the alkyl acrylate monomers.

2.  The method for preparing the thermoplastic resin according to claim 1, wherein in step a), 30 to 50 wt parts of alkyl acrylate monomers and 1 to 7 wt parts of aromatic vinyl monomers having large refractive indexes are used; and in step b), 10 to 50 wt parts of aromatic vinyl compound monomers, 10 to 25 wt parts of vinyl cyanide compound monomers, and 1 to 25 wt parts of methacrylate alkyl ester compound monomers are grafted into the core rubber latex prepared in step a) with the oil soluble initiator.

3.  The method for preparing the thermoplastic resin according to claim 1 or 2, wherein the core rubber latex prepared in step a) has a particle diameter of 2500 to 5000 Å, and a pH of 5 to 9.

4.  The method for preparing the thermoplastic resin according to claim 1 or 2, wherein the latex of the graft ASA resin prepared in step b) has a particle diameter of 3500 to 6000 Å, and a pH of 8 to 11.

5.  The method for preparing the thermoplastic resin according to claim 1 or 2, wherein the alkylacrylate is butylacrylate or a derivative thereof.

6.  The method for preparing the thermoplastic resin according to claim 1 or 2, wherein the aromatic vinyl monomer used in step a) is styrene or a derivative thereof.

7.  The method for preparing the thermoplastic resin according to claim 1 or 2, wherein the aromatic vinyl compound used in step b) is styrene or a derivative thereof.

8.  The method for preparing the thermoplastic resin according to claim 1 or 2, wherein the vinyl cyanide compound is acrylonitrile or a derivative thereof.

9.  The method for preparing the thermoplastic resin according to claim 1 or 2, wherein the methacrylate alkyl ester is methylmethacrylate or a derivative thereof.

10. The method for preparing the thermoplastic resin according to claim 1 or 2, wherein the oil soluble initiator is diisopropylbenzene hydroperoxide or cumene hydroperoxide.

**Revendications**

1.  Procédé pour la préparation d'un résine thermoplastique résistant aux intempéries, présentant des propriétés excellentes de correspondance de teinture en couleur, une brillance durable comprenant les étapes de :

    a) préparer un caoutchouc latex noyau utilisant des monomères acrylates alkyles et des monomères vinyles aromatiques ; et
    b) greffer un composé vinyle aromatique, un composé cyanide vinyle, et des monomères composés éthers alkyles méthacrylates, dans ledit caoutchouc latex noyau, préparés à l'étape a), avec un initiateur soluble dans l'huile ;

    **caractérisé en ce que** les monomères vinyles aromatiques dans l'étape a) présentent un index de réfraction supérieure comparé à celui des monomères acryliques alkyles.

2.  Procédé pour la préparation de résine thermoplastique selon la revendication 1, **caractérisé en ce que** dans l'étape a), 30 à 50 parties en poids des monomères acrylates alkyles et 1 à 7 parties en poids des monomères vinyles aromatiques présentant des index de réfraction élevés, sont utilisées ; et dans l'étape b), 10 à 50 parties en poids des monomères composés vinyles aromatiques, 10 à 25 parties en poids des monomères composés cyanides vinyles et 1 à 25 parties en poids de monomères composés éthers alkyles méthacrylates sont greffés dans ledit latex caoutchouc noyau préparé à l'étape a) avec un initiateur soluble dans l'huile.

3.  Procédé pour la préparation d'une résine thermoplastique selon l'une des revendications 1 ou 2, **caractérisé en ce que** le latex caoutchouc noyau préparé à l'étape a) présente un diamètre de particules de 2500 à 5000 Å, et un pH de 5 à 9.

4.  Procédé pour la préparation d'une résine thermoplastique selon l'une des revendications 1 ou 2, **caractérisé en ce que** le latex de la résine ASA gréffé préparé à l'étape b) présente un diamètre de particules de 3500 à 6000 Å, et un pH de 8 à 11.

5.  Procédé pour la préparation d'une résine thermoplastique selon l'une des revendications 1 ou 2, **caractérisé en**

**ce que** l'alkylacrylate est un butylacrylate ou un dérivé de celui-ci.

6. Procédé pour la préparation d'une résine thermoplastique selon l'une des revendications 1 ou 2, **caractérisé en ce que** le monomère vinyle aromatique utilisé dans l'étape a) est du styrène ou un dérivé de celui-ci.

7. Procédé pour la préparation d'une résine thermoplastique selon l'une des revendications 1 ou 2, **caractérisé en ce que** le composé vinyle aromatique utilisé dans l'étape b) est du styrène ou un dérivé de celui-ci.

8. Procédé pour la préparation d'une résine thermoplastique selon l'une des revendications 1 ou 2, **caractérisé en ce que** le composé cyanide vinyle est acrylonitrile ou un dérivé de celui-ci.

9. Procédé pour la préparation d'une résine thermoplastique selon l'une des revendications 1 ou 2, **caractérisé en ce que** l'éther alkyle méthacrylate est méthylméthacrylate ou un dérivé de celui-ci.

10. Procédé pour la préparation d'une résine thermoplastique selon l'une des revendications 1 ou 2, **caractérisé en ce que** l'initiateur soluble dans l'huile est du diisopropylbenzène hydropéroxide ou hydropéroxide cumène.

**Patentansprüche**

1. Verfahren zum Herstellen eines wetterbeständigen thermoplastischen Harzes mit ausgezeichneten Colormatching-Eigenschaften und internem Glanz, das die folgenden Schritte aufweist:

a) Herstellen eines Kernkautschuklatexes unter Verwendung von Alkylalcrylatmonomeren und aromatischen Vinylmonomeren; und
b) Einpfropfen von monomeren aromatischen Vinylverbindungen, monomeren Vinylcyanidverbindungen und monomeren Methacrylatalkylesterverbindungen in den in Schritt a) hergestellten Kernkautschuklatex mit einem öllöslichen Starter;

**dadurch gekennzeichnet, dass** die aromatischen Vinylmonomere in Schritt a) einen höheren Brechungsindex als die Alkylacrylatmonomere aufweisen.

2. Verfahren zum Herstellen eines thermoplastischen Harzes nach Anspruch 1, in dem in Schritt a) 30 bis 50 Gewichtsanteile Alkylalcrylatmonomere und 1 bis 7 Gewichtsanteile aromatische Vinylmonomere mit hohen Brechungsindices verwendet werden und in dem in Schritt b), 10 bis 50 Gewichtsanteile monomere aromatische Vinylverbindungen, 10 bis 25 Gewichtsanteile monomere Vinylcyanidverbindungen und 1 bis 25 Gewichtsanteile monomere Methacrylatalkylesterverbindungen mit dem öllöslichen Starter in den in Schritt a) hergestellten Kernkautschuklatex eingepfropft werden.

3. Verfahren zum Herstellen eines thermoplastischen Harzes nach Anspruch 1 oder 2, in dem der in Schritt a) hergestellte Kernkautschuklatex einen Partikeldurchmesser von 2.500 bis 5.000 Å und einen pH-Wert von 5 bis 9 aufweist.

4. Verfahren zum Herstellen eines thermoplastischen Harzes nach Anspruch 1 oder 2, in dem der in Schritt b) hergestellte Latex des ASA Pfropfharzes einen Partikeldurchmesser von 3.500 bis 6.000 Å und einen pH-Wert von 8 bis 11 aufweist.

5. Verfahren zum Herstellen eines thermoplastischen Harzes nach Anspruch 1 oder 2, in dem das Alkylacrylat Butylacrylat oder ein Derivat davon ist.

6. Verfahren zum Herstellen eines thermoplastischen Harzes nach Anspruch 1 oder 2, in dem das in Schritt a) verwendete aromatische Vinylmonomer Styrol oder ein Derivat davon ist.

7. Verfahren zum Herstellen eines thermoplastischen Harzes nach Anspruch 1 oder 2, in dem die in Schritt b) verwendete aromatische Vinylverbindung Styrol oder ein Derivat davon ist.

8. Verfahren zum Herstellen eines thermoplastischen Harzes nach Anspruch 1 oder 2, in dem die Vinylcyanidverbindung Acrylnitril oder ein Derivat davon ist.

**9.** Verfahren zum Herstellen eines thermoplastischen Harzes nach Anspruch 1 oder 2, in dem der Methacrylatalkylester Methylmethacrylat oder ein Derivat davon ist.

**10.** Verfahren zum Herstellen eines thermoplastischen Harzes nach Anspruch 1 oder 2, in dem der öllösliche Starter Diisopropylbenzolhydroperoxid oder Cumolhydroperoxid ist.